# EUROPEAN PATENT APPLICATION

(11) **EP 2 801 700 A1**
(43) Date of publication of application: **12.11.2014**
(21) Application number: 13166626.5
(22) Date of filing: 06.05.2013
(51) Int. Cl.: F01D 5/14, F01D 17/16, F02C 6/12

(54) **Guide apparatus for a turbine of an exhaust gas turbocharger**

(71) Applicant: Bosch Mahle Turbo Systems GmbH & Co. KG, 70376 Stuttgart (DE)
(72) Inventor: Thangavelu, Kanagaraj, 641047 Tamil Nadu (IN)
(74) Representative: BRP Renaud & Partner mbB Rechtsanwälte Patentanwälte Steuerberater

(57) **Abstract**

The present invention relates to a guide apparatus (4) for guiding a gas flow (6) for a turbine (2), preferentially of an exhaust gas turbocharger (1), with a plurality of instationary guide blades (7) arranged distributed in an annular manner, which with respect to their blade angle with regard to the gas flow (6) are adjustably configured between an open position with maximum through-flow cross section (9) for the gas flow (6) and a closed position with minimal through-flow cross section (11) for the gas flow (6), an with a plurality of stationary guide blades (8) arranged distributed in an annular manner, which are configured fixed with respect to their blade angle relative to the gas flow (6).

The efficiency of the turbine (2) can be improved if at least one of the stationary guide blades (8) is arranged on a windward side (12) of one of the instationary guide blades (7).

## Description

The present invention relates to a guide apparatus for guiding a gas flow in a turbine, preferentially of an exhaust gas turbocharger, with the features of the preamble of Claim 1. The invention additionally relates to a turbine equipped with such a guide apparatus and an exhaust gas turbocharger equipped with such a turbine.

Internal combustion engines, in particular in vehicle applications, can be equipped with an exhaust gas turbocharger to increase the power, which exhaust gas turbocharger in the usual manner comprises a turbine and a compressor which is drive-connected to said turbine. Exhaust gas of the internal combustion engine drives the turbine, which in turn drives the compressor in order to compress fresh air for the internal combustion engine. To regulate the performance of such an exhaust gas turbocharger, the turbine of the exhaust gas turbocharger can be equipped with a variable turbine geometry, in particular in diesel engines. Such a variable turbine geometry, which is frequently also called "VTG", usually comprises a guide apparatus for guiding the exhaust gas flow to a turbine wheel of the turbine, wherein the guide apparatus comprises guide blades, whose blade angle relative to the gas flow is adjustable. By changing the blade angle of the guide blades, a through-flow cross section of the turbine on the onflow side of the turbine wheel is changed at the same time. In order to achieve a high onflow velocity for the gas flow on the turbine wheel even with a reduced gas flow, a reduced flow cross section can be adjusted with the help of the adjustable guide blades.

Changing the blade angle of the guide blades thus leads to a change of the through-flow cross section and accordingly to a change of the flow velocity of the gas flow. By changing the blade angle of the guide blades, the onflow angle for the gas flow with respect to the turbine wheel changes as well. As a rule, the guide apparatus is designed so that for the maximum flow rate with maximum through-flow cross section an optimised onflow angle between the gas flow and the turbine wheel is present. For example, the respective guide blade can be inclined with respect to a circumferential direction by approximately 45° for this purpose. For compensating a reduced flow rate the through-flow cross section is now reduced, the angle of the guide blades with respect to the circumferential direction is also reduced, as a result of which the onflow angle leaves the optimum range between gas flow and turbine wheel. As a consequence, the efficiency of the turbine is reduced. There is therefore a need to improve the efficiency of the turbine especially with smaller flow rates.

From DE 10 2010 047 252 A1 a guide apparatus is known, which comprises a plurality of instationary guide blades arranged in an annularly distributed manner and a plurality of stationary guide blades arranged in an annularly distributed manner. While the instationary guide blades with respect to their blade angle relative to the gas flow are adjustable between an open position with maximum through-flow cross section for the gas flow and a closed position with minimal through-flow cross section for the gas flow, the stationary guide blades cannot be adjusted so that these are configured fixed with respect to their blade angle relative to the gas flow. In this way it is achieved that at least the stationary guide blades are optimally orientated relative to the gas flow regardless of the current position of the instationary guide blades. With the known guide apparatus, an instationary guide blade each and a stationary guide blade each form a guide blade arrangement, which comprises an onflow portion comprising an onflow edge formed through the stationary guide blade and an outflow portion comprising an outflow edge formed through the instationary guide blade. The arrangement of the stationary guide blade and of the instationary guide blade within the respective guide blade arrangement is effected in such a manner that an onflow edge of the respective instationary guide blade adjoins an outflow edge of the respective stationary guide blade in a flush manner, so that within the respective guide blade arrangement the onflow portion is fixed, while the outflow portion is adjustable. Through this measure it can be achieved that the blade angle of the respective guide blade arrangement remains constant relative to the oncoming gas flow regardless of the adjusted through-flow cross section. Disadvantageous, however, even with this constellation is that the onflow angle between the gas flow and the turbine wheel changes dependent on the adjusted through-flow cross section.

The present invention deals with the problem of stating an improved embodiment for a guide apparatus of the type mentioned at the outset or for a turbine equipped with such or for an exhaust gas turbocharger equipped with such, which is characterized in particular in that the efficiency of the turbine is improved. In particular, an improved onflow of the turbine wheel is to be possible regardless of the adjusted through-flow cross section.

According to the invention, this problem is solved through the subject of the independent claim. Advantageous embodiments are subject of the dependent claims.

The invention is based on the general idea of arranging the stationary guide blades relative to the instationary guide blades on the windward side. The windward side of the respective instationary guide blade is to mean the side of the respective instationary guide blade facing the oncoming gas flow. This windward side extends from an outflow edge of the respective instationary guide blade as far as to an outflow edge of the respective instationary guide blade. The windward side thus differs from a leeward side of the respective instationary guide blade, which likewise extends from the onflow edge as far as to the outflow edge, but faces away from the oncoming gas flow. Through the windward arrangement of the stationary guide blades relative to the instationary guide blades it is achieved that the stationary guide blades are not covered by the instationary guide blades. This applies in particular to the closed position of the instationary guide blades, so that the stationary guide blades can generate a predetermined onflow angle for the gas flow with respect to the turbine wheel even with minimal through-flow cross section. Thus, with the help of the specifically positioned stationary guide blades, an always optimal onflow angle between the gas flow and the turbine wheel can be achieved regardless of the position of the instationary guide blades. This leads to an increased efficiency of the turbine in particular with smaller flow rates.

A "guide blade" in this case is to mean a flow guiding body, i.e. a body having a flow guiding function. A guide blade thus has a flow guiding profile in cross section, which can preferentially be configured as an aerofoil profile. Such a flow guiding profile in this case is elongated and can in particular comprise a rounded onflow edge and an outflow edge which is pointed by comparison. The outflow edge in this case is also rounded as a rule, however with a significantly smaller radius than the onflow edge. Square and circular cross sections in particular are not flow guiding profiles.

A "blade angle" usually is to mean the angle of a profile chord of the respective guide blade with respect to the main flow direction of the gas flow. The "profile chord" in this case is a straight line, which in the cross-sectional profile of the respective guide blades runs through the onflow edge and through the outflow edge.

In principle it is sufficient if only a single stationary guide blade is arranged on the windward side of one of the instationary guide blades in order to improve the onflow with respect to the turbine wheel. Preferably, however, a plurality of stationary guide blades are each arranged on the windward side of the instationary guide blades. Particularly advantageous is an embodiment, in which such a stationary guide blade each is arranged on the windward side each of all instationary guide blades.

According to an advantageous embodiment, the respective stationary guide blade can have a blade angle which largely corresponds to the blade angle of the associated instationary guide blade in its open position. The term "largely" in this case is to mean that the blade angle of the stationary guide blade need not necessarily exactly correspond to the blade angle of the associated instationary guide blade in its open position, but can deviate from this by a maximum of ± 5° and preferentially maximally ± 5°.

Since the stationary guide blades and the instationary guide blades in the open position of the instationary guide blades thus substantially have the same blade angle with respect to the oncoming gas flow, an optimal uniform onflow for the turbine wheel is obtained for this open position for the large flow rates. At the same time, this means that the same optimal onflow angle for the gas flow with respect to the turbine wheel can be achieved even with small flow rates via the stationary guide blades.

With another embodiment, an onflow edge of the respective stationary guide blade can be arranged in the flow direction of the gas flow behind an onflow edge of the associated instationary guide blade. This means that the oncoming gas flow initially strikes the instationary guide blades and can only subsequently strike the stationary guide blades. Because of this it is ensured that the onflow angle between the gas flow and the turbine wheel is decisively determined through the following stationary guide blades.

According to another advantageous embodiment, an onflow edge of the respective stationary guide blade can be arranged in the flow direction of the gas flow in the region of an axis of rotation of the associated instationary guide blade. In this way, a distance between the stationary guide blades and the instationary guide blades can be reduced without there being the risk of a collision or an impairment of the adjustability of the respective instationary guide blade.

Particularly advantageous is an embodiment, in which the respective stationary guide blade in the open position of the associated instationary guide blade abuts the windward side of the latter such that the stationary guide blade and the instationary guide blade define a continuous common flow guiding contour on the windward side of the respective guide blade arrangement, consisting of a single instationary guide blade and a single stationary guide blade. In other words, in the open position of the instationary guide blades the guide blade arrangements formed of an instationary guide blade each and a stationary guide blade each become a guide blade unit with a uniform or common flow guiding contour on the windward side. Because of this, flow resistances can be substantially reduced in particular in the open position of the instationary guide blades.

According to an advantageous further development, a leeward side of the respective stationary guide blade can be shaped complementarily to the windward side of the respective associated instationary guide blade in such a manner that the instationary guide blade in the open position abuts the stationary guide blade in a flat manner. Because of this, a particularly compact and thus low-resistance guide blade unit in the open position is obtained.

According to another embodiment, an outflow edge of the respective instationary guide blade in the open position can be arranged in the region of an outflow edge of the associated stationary guide blade. Because of this, a quasi common outflow edge for the guide blade unit can be defined, which reduces flow resistances.

In another embodiment, the guide blades, i.e. the stationary and the instationary guide blades, can be arranged in a gas path, which in the installed state of the guide apparatus guides the gas flow to a turbine wheel of the turbine. The stationary guide blades can now be configured so that at least in this installed state they are axially supported on two walls axially bounding the gas path. The term "axial" in this case relates to an axial direction which is defined through an axis of rotation of the turbine wheel and extends parallel to this axis of rotation. In other words, the stationary guide blades according to this proposal are used as spacer elements in order to position the two walls, which serve for axially bounding the gas path, relative to each other. Here, the stationary guide blades differ from conventional spacer elements significantly in that they each define a flow guiding profile, which is specifically designed and orientated for generating a predetermined onflow angle between gas flow and turbine wheel. In contrast with this, conventional spacer elements usually have a circular cross section and a different positioning.

According to an advantageous further development, the one wall can be formed through a guide blade carrier of the guide apparatus, on which the instationary guide blades are adjustably mounted and on which the stationary guide blades can be fastened. In contrast with this, the other wall can be formed on a cover of the guide apparatus or on a housing of the turbine. With the help of such a cover, the guide apparatus can be configured as a cartridge, which can be quasi installed as a uniform assembly in the housing of the turbine. Provided no cartridge design is used, the stationary guide blades can directly support the guide blade carrier on the housing of the turbine.

According to another advantageous further development, the respective stationary guide blade can be dimensioned larger in the axial direction than the associated instationary guide blade. Because of this it is achieved that the axial height of the gas path is larger than the axial height of the instationary guide blades, as a result of which the instationary guide blades can be smoothly adjusted. A minor axial play is already sufficient for this.

A turbine according to the invention is thus characterized by a guide apparatus of the type described above, which is arranged coaxially to an axis of rotation of the turbine wheel of the turbine, so that the instationary guide blades can control the gas flow to the turbine wheel. An exhaust gas turbocharger according to the invention comprises a turbine of the type mentioned above and a compressor, the compressor wheel of which is drive-connected wit the turbine wheel.

Further important features and advantages of the invention are obtained from the subclaims, from the drawings and from the associated Figure description by means of the drawings.

It is to be understood that the features mentioned above and still to be explained in the following cannot only be used in the respective combination stated but also in other combinations or by themselves without leaving the scope of the present invention.

Preferred exemplary embodiments of the invention are shown in the drawings and are explained in more detail in the following description, wherein same reference characters relate to same or similar or functionally same components.

It shows, in each case schematically,
- Fig. 1: an axial view of a turbine in the region of a guide apparatus with an open position of associated instationary guide blades,
- Fig. 2: a view as in Fig. 1, however with a closed position of the instationary guide blades,
- Fig. 3: an enlarged view of a detail III from Fig. 1 in the region of two guide blade arrangements in the open position,
- Fig. 4: an enlarged view of a detail IV in Fig. 2 in the region of two guide blade arrangements in the closed position.

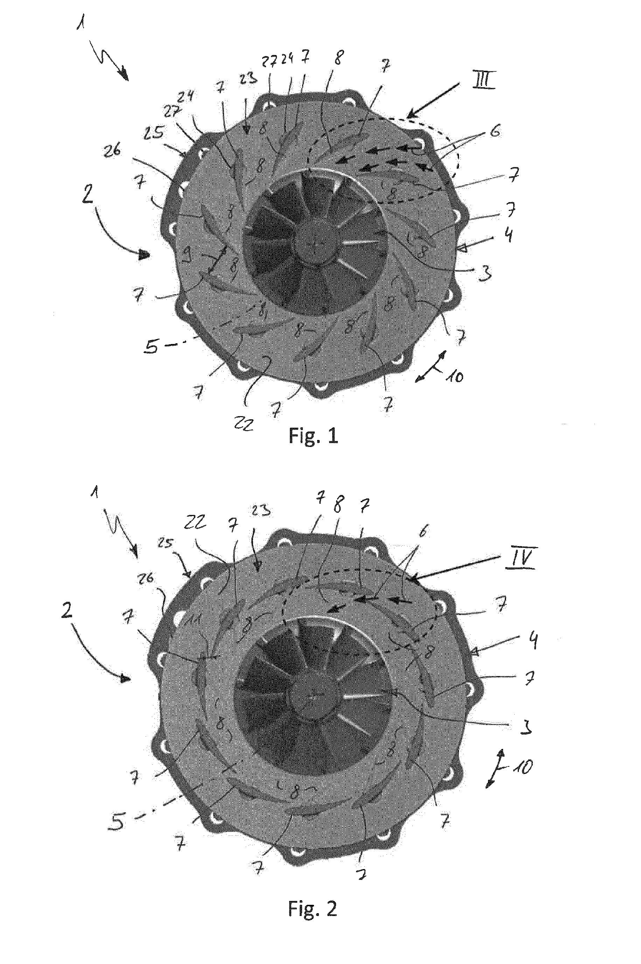

According to Figures 1 and 2, an exhaust gas turbocharger 1 which is only partially shown here comprises a turbine 2, a turbine wheel 3 and a compressor which is not shown here, which comprises a compressor wheel which is not shown here, and which is drive connected to the turbine wheel 3. In addition, the turbine 2 comprises a guide apparatus 4, which is arranged coaxially to an axis of rotation 5 of the turbine wheel 3.

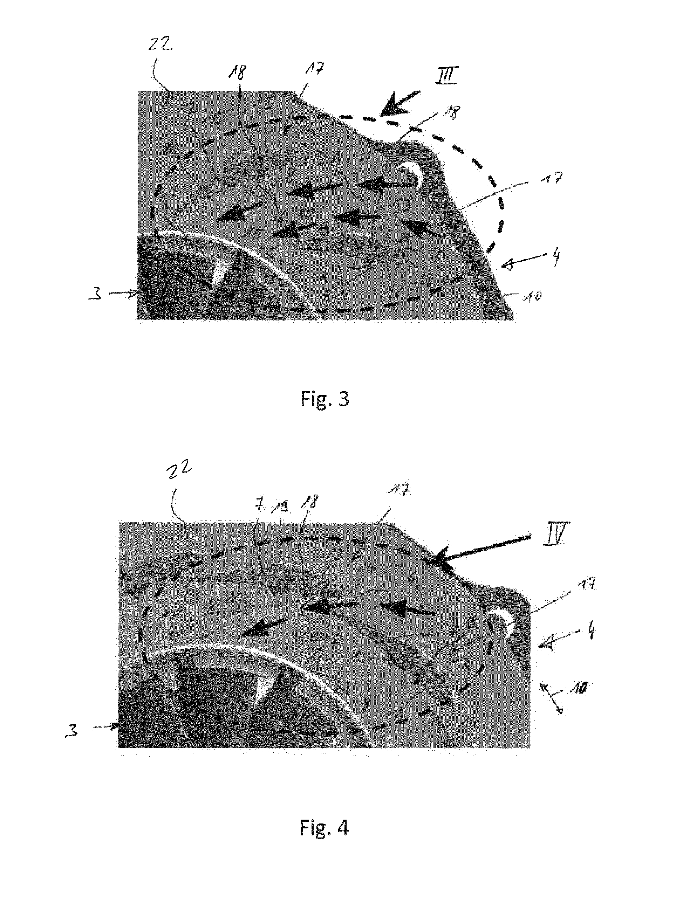

The guide apparatus 4 serves for guiding a gas flow 6, which in the Figures 1 to 4 is indicated by arrows, within the turbine 2 to the turbine wheel 3. To this end, the guide apparatus 4 comprises a plurality of instationary guide blades 7 arranged with respect to the axis of rotation 5 in an annularly distributed manner and a plurality of stationary guide blades 8 which are arranged with respect to the axis of rotation 5 in an annularly distributed manner. The instationary guide blades 7 are adjustably configured with respect to their blade angle relative to the gas flow 6, while the stationary guide blades 8 are configured fixed with respect to their blade angle relative to the gas flow 6. Here, the instationary, i.e. adjustable guide blades 7 are adjustable between an open position shown in the Figures 1 and 3 and a closed position shown in the Figures 2 and 4. In the open position, the instationary guide blades 7 define a maximum through-flow cross section 9 for the gas flow 6, which is exemplarily entered in Figure 1 between instationary guide blades 7 which are adjacent in the circumferential direction 10. In contrast with this, a minimal through-flow cross section 11 for the gas flow 6 is defined with the help of the instationary guide blades 7 in their closed position, which is exemplarily entered in Figure 2 between two instationary guide blades 7 adjacent in the circumferential direction 10. It is clear that in principle any intermediate positions with correspondingly other cross sections can also be adjusted.

In the case of the preferred embodiment of the guide apparatus 4 introduced here, each instationary guide blade 7 is assigned exactly one stationary guide blade 8, which with respect to the associated instationary guide blade 7 is arranged on the windward side. Corresponding to Figures 3 and 4, the respective instationary guide blade 7 has a windward side 12 facing the oncoming gas flow 6 and a leeward side 13 facing away from the oncoming gas flow. Here, both the windward side 12 as well as the leeward side 13 each extend from an onflow edge 14 of the respective instationary guide blade 7 as far as to an outflow edge 15 of the respective instationary guide blade 7.

According to Figure 3, the stationary guide blades 8 are practically arranged so that with respect to the oncoming gas flow 6 they have a blade angle which is substantially equal to the blade angle of the associated instationary guide blade 7 in its open position. Furthermore, positioning of the stationary guide blades 8 is preferably effected so that in the open position of the associated instationary guide blade 7 they abut the windward side 12 of said instationary guide blade 7. Because of this, a common, continuous flow guiding profile 16 on the windward side can be defined.

Since for each instationary guide blade 7 an associated stationary guide blade 8 is provided, an instationary guide blade 7 each and a stationary guide blade 8 each form a guide blade arrangement 17, which at least in the open position of the instationary guide blades 7 forms a unit and accordingly can also be called guide blade unit 17. In the case of the embodiment introduced here, the respective guide blade arrangement 17 also forms a common flow guiding profile 16 on the windward side in the closed position of the instationary guide blades 7 so that a guide blade unit 7 is present also in the closed position. In order to achieve this, positioning of the respective stationary guide blade 8 is effected in such a manner that corresponding to the Figures 3 and 4, an onflow edge 18 of the respective stationary guide blade 8 in the flow direction of the gas flow 6 is arranged behind the respective onflow edge 14 of the associated instationary guide blade 7. In the example of the Figures 3 and 4, the onflow edge 18 of the respective stationary guide blade 8 is located in the region of an axis of rotation 19, about which the respective instationary guide blade 7 is rotatably arranged.

In order for the guide blade arrangement 17 to be as compact as possible in the open position and forms a correspondingly low flow resistance, a leeward side 20 of the receptive stationary guide blade 8 is practically formed complementarily to the windward side 12 of the associated instationary guide blade 7. In the example of Figures 3 and 4, the windward side 12 of the respective instationary guide blade 7 is concavely formed towards the outside in the region of the associated stationary guide blade 8. Complementarily thereto, the leeward side 20 of the associated stationary guide blade 8 is convexly curved towards the outside. In the open position, the respective instationary guide blade 7 can thus come to bear against the associated stationary guide blade 8 according to Figures 1 and 3 in a flat manner.

As is evident, furthermore, from the Figures 1 and 3, the outflow edges 15 of the instationary guide blades 7 in the open position of the instationary guide blades 7 can coincide with outflow edges 21 of the stationary guide blades 8 and define a common outflow edge 15-21 of the guide blade arrangement 17. In the closed position according to the Figures 2 and 4, the two outflow edges 15, 21 by contrast are separated from each other. As is evident, in particular, from the Figures 1 and 2, the guide blades 7, 8 in the open position of the instationary guide blades 7 define a predetermined onflow angle for the gas flow 6 with respect to the turbine wheel 3. Here, this onflow angle is optimised for an optimal driving force transmission between gas flow 6 and turbine wheel 3. Noticeably, this optimal onflow angle between gas flow 6 and turbine wheel 3 is also maintained when the instationary guide blades 7 are adjusted, since the stationary guide blades 8 continue to define said onflow angle. In this way, an always optimal onflow of the turbine wheel 3 can be ensured with the help of the stationary guide blades 8 regardless of the blade angle of the instationary guide blades 7.

According to the Figures 1 to 4, the guide blades 7 and 8 are arranged within the guide apparatus 4 or within the turbine 2 in a gas path which is not designated in more detail, which gas path the gas flow 6 follows. This gas path leads the gas flow 6 to the turbine wheel 3. Here, the gas path is formed in an annular manner with respect to the axis of rotation 5, wherein the flow through the gas path is substantially radial and the gas path makes possible a radial onflow of the turbine wheel 3 corresponding to the onflow angle defined with the help of the stationary guide blades 8. Here, the gas path is axially bounded by two walls, i.e. parallel to the axis of rotation 5, of which in the Figures 1 to 4 only one each is noticeable.

This noticeable axial wall in this case is designated 22. The two axial walls 22 in the installed state of the guide apparatus 4 are axially supported on each other through the stationary guide blades 8. Practically, a height of the stationary guide blades 8 measured in the axial direction is dimensioned slightly larger than the axial height of the instationary guide blades 7, as a result of which the instationary guide blades 7 in said gas path can have an axial play with respect to the walls 22, which favours a smooth adjustability of the instationary guide blades 7.

The axial wall 22 noticeable here is formed by a guide blade carrier 23 of the guide apparatus 4. On this guide blade carrier 23, the instationary guide blades 7 are adjustably mounted. The stationary guide blades 8 can be fastened to the guide blade carrier 23. In the shown example, each instationary guide blade 7 is connected to a pin 24 in a rotationally fixed manner, which axially penetrates the guide blade carrier 23, thereby forming a bearing point for the respective instationary guide blade 7. On a side of the guide blade carrier 23 facing away from the gas path, an adjusting ring 25, via which a drive member 26 can be rotated in the circumferential direction 10, is located. Here, the adjusting ring 25 actuates actuation arms 27, which in turn are each connected to one of the pins 24 in a rotationally fixed manner. Thus, a rotary adjustment of the adjusting ring 25 leads to a simultaneous pivoting of all instationary guide blades 7.

The other axial wall which is not shown facing the beholder can either be formed on a cover of the guide apparatus 4 or on a housing of the turbine 2.

## Claims

1. A guide apparatus for guiding a gas flow (6) for a turbine (2), preferentially of an exhaust gas turbocharger (1),
- with a plurality of instationary guide blades (7) which are arranged distributed in an annular manner, which with respect to their blade angle with regard to the gas flow (6) are adjustably configured between an open position with maximum through-flow cross section (9) for the gas flow (6) and a closed position with minimal through-flow cross section (11) for the gas flow (6),
- with a plurality of stationary guide blades (8) arranged distributed in an annular manner, which with respect to their blade angle are configured fixed relative to the gas flow (6),
**characterized in that** at least one of the stationary guide blades (8) is arranged on a windward side (12) of one of the instationary guide blades (7).

2. The guide apparatus according to Claim 1, **characterized in that** the respective stationary guide blade (8) has a blade angle, which largely corresponds to the blade angle of the associated instationary guide blade (7) in its open position.

3. The guide apparatus according to Claim 1 or 2, **characterized in that** an onflow edge (18) of the respective stationary guide blade (8) in the flow direction of the gas flow (6) is arranged behind an onflow edge (14) of the associated instationary guide blade (7).

4. The guide apparatus according to any one of the Claims 1 to 3, **characterized in that** an onflow edge (18) of the respective stationary guide blade (8) is arranged in the region of an axis of rotation (19) of the associated instationary guide blade (7).

5. The guide apparatus according to any one of the Claims 1 to 4, **characterized in that** the respective stationary guide blade (8) in the open position of the associated instationary guide blade (7) bears against the windward side (12) of said guide blade (7) in such a manner that the stationary guide blade (8) and the associated instationary guide blade (7) define a continuous common flow guiding contour (16) on the windward side.

6. The guide apparatus according to Claim 5, **characterized in that** a leeward side (20) of the respective stationary guide blade (8) is formed complementarily to the windward side (12) of the associated instationary guide blade (7) so that the instationary guide blade (7) in the open position bears flat against the stationary guide blade (8).

7. The guide apparatus according to any one of the Claims 1 to 6, **characterized in that** an outflow edge (15) of the respective instationary guide blade (7) in the open position is arranged in the region of an outflow edge (21) of the associated stationary guide blade (8).

8. The guide apparatus according to any one of the Claims 1 to 6, **characterized**
- **in that** the guide blades (7, 8) are arranged in a gas path which in the installed state of the guide apparatus (4) guides the gas flow (6) to a turbine wheel (3() of the turbine (2),
- **in that** the stationary guide blades (8) at least in the installed state are axially supported on two walls (22) axially bounding the gas path.

9. The guide apparatus according to Claim 8, **characterized in that** the one wall (22) is formed through a guide blade carrier (23) of the guide apparatus (4) on which the instationary guide blades (7) are adjustably mounted and on which the stationary guide blades (8) are fastened.

10. The guide apparatus according to Claim 9, **characterized in that** the other wall is formed on a cover of the guide apparatus (4) or on a housing of the turbine (2).

11. The guide apparatus according to any one of the Claims 1 to 10, **characterized in that** the respective stationary guide blade (8) in an axial direction is larger than the associated instationary guide blade (7).

12. A turbine, in particular for an exhaust gas turbocharger (1),
- with a turbine wheel (3) which is rotatably mounted about an axis of rotation (5),
- with a guide apparatus (4) according to any one of the Claims 1 to 11, which is coaxially arranged to the axis of rotation (5) in such a manner that the instationary guide blades (7) control the gas flow (6) to the turbine wheel (3).

13. An exhaust gas turbocharger for an internal combustion engine,
- with a turbine (2) according to Claim 12,
- with a compressor whose compressor wheel is drive-connected to the turbine wheel (3).
